# EUROPEAN PATENT APPLICATION

(11) **EP 4 456 446 A1**
(43) Date of publication of application: **30.10.2024**
(21) Application number: 21968829.8
(22) Date of filing: 21.12.2021
(51) Int. Cl.: H04B 10/077, H04J 14/02

(54) **OPTICAL COMMUNICATION CONTROL DEVICE, RECEIVING DEVICE, COMMUNICATION SYSTEM, AND CONTROL METHOD**

(71) Applicant: Nippon Telegraph And Telephone Corporation, Chiyoda-ku Tokyo 100-8116 (JP)
(72) Inventor: TANAKA Yasunari, Musashino-shi, Tokyo 180-8585 (JP); HARA Kazutaka, Musashino-shi, Tokyo 180-8585 (JP); KANAI Takuya, Musashino-shi, Tokyo 180-8585 (JP); KANEKO Shin, Musashino-shi, Tokyo 180-8585 (JP); SENOO Yumiko, Musashino-shi, Tokyo 180-8585 (JP); KANI Junichi, Musashino-shi, Tokyo 180-8585 (JP)
(74) Representative: Brevalex
(86) International application number: PCT/JP2021/047169
(87) International publication number: WO 2023/119392

(57) **Abstract**

One aspect of the present invention is an optical communication control device including an acquisition unit that acquires an optical power of an optical signal transmitted from a transmission device, a derivation unit that derives an attenuation amount for setting the optical power of the optical signal transmitted from the transmission device to an optical power receivable by a receiver device in a case in which the optical power acquired by the acquisition unit exceeds the optical power receivable by the receiver device, and an attenuation unit that causes an attenuator that attenuates the optical power of the optical signal transmitted from the transmission device to attenuate the optical power with the attenuation amount derived by the derivation unit.

## Description

### Technical Field

The present invention relates to technology of an optical communication control device, a receiver device, a communication system, and a control method.

### Background Art

In the International Telecommunication Union Telecommunication Standardization sector (ITU-T) G.989.2 recommendations, a PON system for performing wavelength multiplexing, called a Point to Point (PtP) Wavelength Division Multiplexing (WDM)-PON, has been defined (refer to NON PATENT LITERATURE 1).

In the PtP WDM-PON system, communication is performed using an optical wavelength different for each optical network unit (ONU) in an uplink direction from an ONU to an optical line terminal (OLT) and a downlink direction from the OLT to the ONU.

As described in NON PATENT LITERATURE 1, in the PtP WDM-PON system, it is defined that a management control signal called an auxiliary management and control channel (AMCC) is used as a signal for management and control used between an OLT and an ONU.

An AMCC signal is a signal in which information to be transmitted is modulated by a predetermined method and then transmitted by being superimposed on a main signal. Since the AMCC signal is superimposed on the main signal and transmitted, OLTs and ONUs can transmit signals for management and control within a wavelength range of an optical wavelength used in the main signal. That is, management and control are realized without using a dedicated optical wavelength range for management and control. A wavelength determination process in which an uplink optical wavelength and a downlink optical wavelength are determined is performed using an AMCC signal.

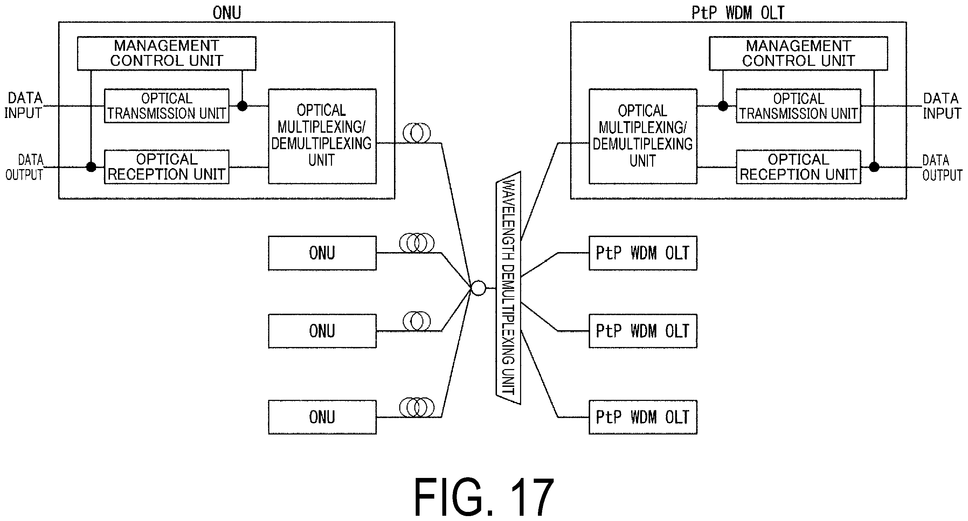

Fig. 17 is a diagram showing the PtP WDM-PON system. An OLT or an ONU includes a management control unit. On a transmission side (for example, an ONU), an AMCC signal is superimposed on a main signal output from an optical transmission unit by a management control unit and input to an optical multiplexing/demultiplexing unit. The AMCC signal input to the optical multiplexing/demultiplexing unit on a reception side (for example, an OLT) is received by an optical reception unit, converted into an electrical signal, and then separated from the main signal by a management control unit.

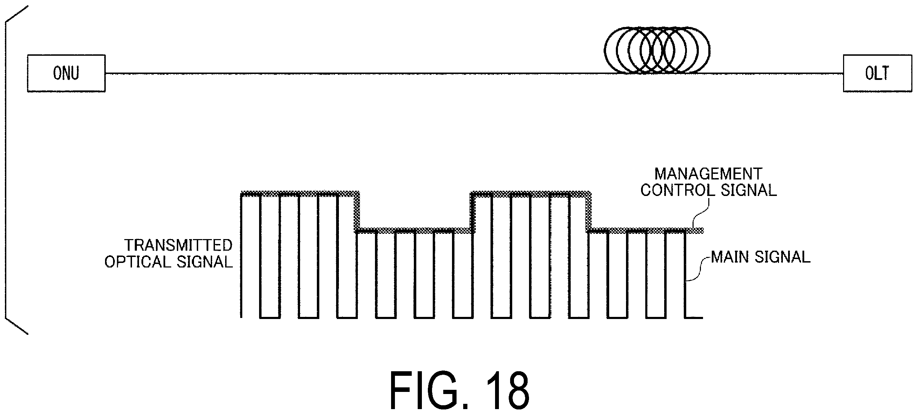

Fig. 18 shows an example of the main signal after the management control signal is superimposed, that is, the optical signal transmitted from the ONU or the OLT. Intensity modulation is added to the envelope of the main signal since the management control signal is superimposed on the transmitted optical signal. It is expected that the main signal will be a high-speed signal having a data rate of Gb/s order, whereas the management control signal is a low-rate signal having a data rate of kb/s order (refer to NON PATENT LITERATURE 2).

Meanwhile, an all-photonics network (APN) which is an innovative network based on photonics technology has been studied. The APN relays an optical backbone network and an optical access network through an optical node and provides an optical path end-to-end for each service. As the optical node, an optical switch (SW) is assumed.

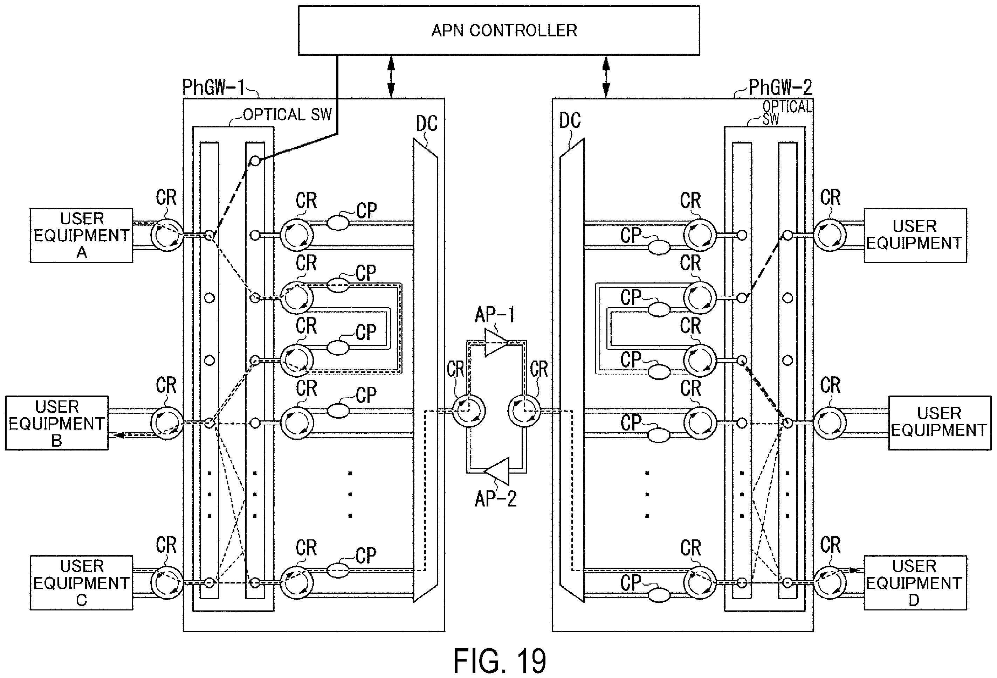

Fig. 19 shows a configuration of an optical communication system to which an APN is applied (refer to NON PATENT LITERATURE 3). The optical communication system shown in Fig. 19 includes an APN controller, a PhGW-1, a PhGW-2, and an optical transmission line. Furthermore, the PhGW-1 and PhGW-2 are composed of an optical SW and a wavelength multiplexing/demultiplexing unit DC. The wavelength multiplexing/demultiplexing unit DC is an arrayed waveguide grating (AWG), for example. Further, the optical communication system includes a circulator CR, a coupler CP, amplifiers AP-1 and AP-2, and the like. The APN controller controls allocation of a wavelength used by user equipment and the PhGW-1 and PhGW-2.

Fig. 19 shows that user equipment A and user equipment B communicate with each other. In addition, it is shown that user equipment C and user equipment D communicate with each other. As described above, since different wavelengths are used on uplink and downlink, the user equipment A uses λu1 as a wavelength of an uplink signal and uses λd1 as a wavelength of a downlink signal, for example. Similarly, the user equipment B uses λu2 as a wavelength of an uplink signal and uses λd2 as a wavelength of a downlink signal.

In the optical communication system shown in Fig. 19, optical SWs are connected by a plurality of optical transmission lines, and the optical SWs and the optical transmission lines are connected via the wavelength multiplexing/demultiplexing unit DC. When an optical signal is input to an optical transmission line, signals of a plurality of wavelengths are multiplexed by the wavelength multiplexing/demultiplexing unit DC and input. When an optical signal is output from an optical transmission line, signals of a plurality of wavelengths are demultiplexed by the wavelength multiplexing/demultiplexing unit DC and output. By setting a connection relationship between an input port and an output port in an optical SW, an optical transmission line through which an optical signal passes can be selected. The APN controller connected to an optical SW determines a relationship between the input port and the output port of the optical SW and instructs the optical SW.

Specifically, when user equipment performs initial connection, connection between the APN controller and the user equipment is started, and the APN controller receives an AMCC signal. The APN controller that has detected the user equipment sets a wavelength for the user equipment and transmits a route to the optical SW to communicate with the opposite user equipment.

In the APN, it is assumed that a transmitter capable of long-distance transmission and a receiver having higher sensitivity than before are provided in user equipment in order to perform direct optical connection between user equipment.

### Citation List

### Non Patent Literature

Non Patent Literature 1: "ITU-T G. 989.2 Recommendation, "40-Gigabit-capable-passive optical networks (NG-PON2): Physical media dependent (PMD) layer specification," Feb. 2019.
Non Patent Literature 2: Y. Luo, H. Roberts, K. Grobe, M. Valvo, D. Nesset, K. Asaka, H. Rohde, J. Smith, J. S. Wey, and F. Effenberger, "Physical Layer Aspects of NG-PON2 Standards-Part 2: System Design and Technology Feasibility," J. Opt. Com-mun. Netw., 8(1), pp. 43-52, Jan. 2016.
Non Patent Literature 3: "Photonic Gateway supporting All-Photonics Network", Takuya Kanai, B-8-20, IEICE General Conference, 2021

### Summary of Invention

### Technical Problem

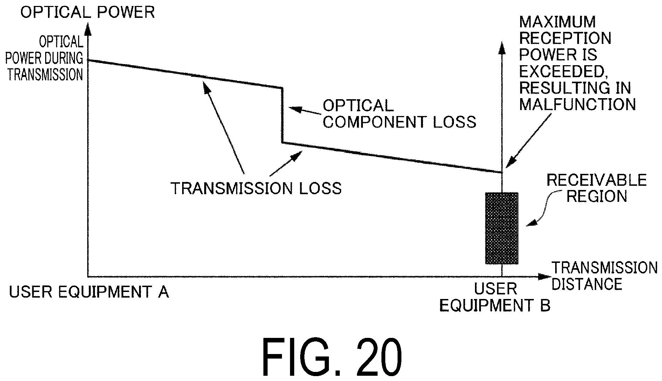

In the above-described optical communication system, in a case in which a transmission distance between user equipment is short, excessive optical power is received by the user equipment, and there is a possibility that receivers will malfunction. For example, when an SOA integrated EADFB laser is used for a transmitter, an avalanche photodiode (APD) having an optical power of +9 dBm and a maximum reception sensitivity of -6 dBm is mounted in a receiver. In a case in which the aforementioned user equipment A and user equipment B communicate with each other (refer to Fig. 20), a transmission loss and a loss due to optical components such as a circulator, a coupler, and an optical SW may occur, but the upper limit of optical power that the user equipment B can receive may be exceeded. For example, when an optical SW has a one-way attenuation of 2dB, an optical circulator has an attenuation of 0.8 dB, a 1:9 coupler has an attenuation of 0.7 dB, and a transmission loss of a fiber is 0.3 dB/km, the user equipment B may stop working at a transmission distance within 23 km.

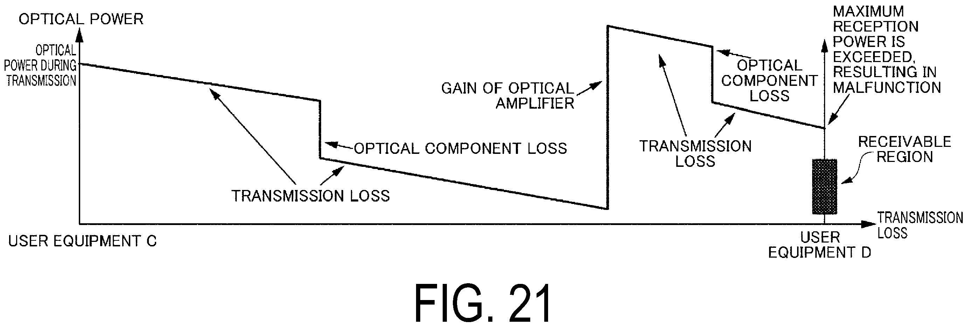

In a case in which an optical signal of the user equipment C is amplified by the optical amplifier AP-1 and connected to the user equipment D under the PhGW-2 of another ground as in the user equipment C and the user equipment D (refer to Fig. 21), assuming that the optical signal is amplified by 35 dB by the optical amplifier AP-1, and arrayed waveguide gratings (AWG) that are not illustrated has a loss of 4.5 dB, there is a possibility that the user equipment D will malfunction at a transmission distance within 105 km.

In this manner, when optical power exceeds the optical power that can be received by a receiver device, there is a possibility that the device will malfunction.

In view of the above circumstances, an object of the present invention is to provide a technique for preventing a device from malfunctioning due to excessive optical power.

### Solution to Problem

One aspect of the present invention is an optical communication control device including: an acquisition unit configured to acquire an optical power of an optical signal transmitted from a transmission device; a derivation unit configured to derive an attenuation amount for setting the optical power of the optical signal transmitted from the transmission device to an optical power receivable by a receiver device in a case in which the optical power acquired by the acquisition unit exceeds the optical power receivable by the receiver device; and an attenuation unit configured to cause an attenuator that attenuates the optical power of the optical signal transmitted from the transmission device to attenuate the optical power with the attenuation amount derived by the derivation unit.

One aspect of the present invention is a receiver device including: a reception unit configured to receive an optical signal; a detection unit provided before the reception unit and configured to detect an optical power of the optical signal received by the reception unit; a derivation unit configured to derive an attenuation amount for setting the optical power of the optical signal to an optical power receivable by the reception unit in a case in which the optical power detected by the detection unit exceeds the optical power receivable by the reception unit; and an attenuation unit configured to cause an attenuator that attenuates the optical power of the optical signal received by the reception unit to attenuate the optical power with the attenuation amount derived by the derivation unit.

One aspect of the present invention is a communication system including an optical communication control device and an attenuator that attenuates optical power of an optical signal, wherein the optical communication control device includes: an acquisition unit configured to acquire an optical power of an optical signal transmitted from a transmission device; a derivation unit configured to derive an attenuation amount for setting the optical power of the optical signal transmitted from the transmission device to an optical power receivable by a receiver device in a case in which the optical power acquired by the acquisition unit exceeds the optical power receivable by the receiver device; and an attenuation unit configured to cause the attenuator that attenuates the optical power of the optical signal transmitted from the transmission device to attenuate the optical power with the attenuation amount derived by the derivation unit.

One aspect of the present invention is a control method of an optical communication control device, the control method including: an acquisition step of acquiring an optical power of an optical signal transmitted from a transmission device; a derivation step of deriving an attenuation amount for setting the optical power of the optical signal transmitted from the transmission device to an optical power receivable by a receiver device in a case in which the optical power acquired in the acquisition step exceeds the optical power receivable by the receiver device; and an attenuation instruction step of causing an attenuator that attenuates the optical power of the optical signal transmitted from the transmission device to attenuate the optical power with the attenuation amount derived in the derivation step.

One aspect of the present invention is a control method of a communication system including an optical communication control device and an attenuator that attenuates optical power of an optical signal, wherein the optical communication control device includes: an acquisition step of acquiring an optical power of an optical signal transmitted from a transmission device; a derivation step of deriving an attenuation amount for setting the optical power of the optical signal transmitted from the transmission device to an optical power receivable by a receiver device in a case in which the optical power acquired in the acquisition step exceeds the optical power receivable by the receiver device; and an attenuation instruction step of causing the attenuator that attenuates the optical power of the optical signal transmitted from the transmission device to attenuate the optical power with the attenuation amount derived in the derivation step.

### Advantageous Effects of Invention

According to the present invention, it is possible to prevent malfunction of a device due to excessive optical power.

### Brief Description of Drawings

[Fig. 1] Fig. 1 is a block diagram showing a configuration of a communication system in a first embodiment.
[Fig. 2] Fig. 2 is a diagram showing a configuration example of an optical communication control device.
[Fig. 3] Fig. 3 is a diagram for describing an example of deriving an attenuation amount.
[Fig. 4] Fig. 4 is a diagram showing a configuration example of PMATT.
[Fig. 5A] Fig. 5A is a diagram showing a configuration example using a beam splitter and an absorber.
[Fig. 5B] Fig. 5B is a diagram showing a relationship between an attenuation amount and an angle.
[Fig. 6A] Fig. 6A is a diagram showing a configuration example using an EA modulator.
[Fig. 6B] Fig. 6B is a diagram showing a relationship between an attenuation amount and a voltage.
[Fig. 7A] Fig. 7A is a diagram showing a configuration example using bending of an optical fiber.
[Fig. 7B] Fig. 7B is a diagram showing a relationship between a bending amount and a voltage.
[Fig. 8] Fig. 8 is a flowchart showing a flow of processing of the optical communication control device.
[Fig. 9] Fig. 9 is a block diagram showing a configuration of a communication system in a second embodiment.
[Fig. 10] Fig. 10 is a diagram showing a configuration example of user equipment in the second embodiment.
[Fig. 11] Fig. 11 is a diagram showing an example of attenuation due to a transmission distance or the like.
[Fig. 12] Fig. 12 is a block diagram showing a configuration of a communication system in a fourth embodiment.
[Fig. 13] Fig. 13 is a diagram showing a configuration example of PMATT.
[Fig. 14] Fig. 14 is a diagram showing a configuration example of user equipment in a fifth embodiment.
[Fig. 15] Fig. 15 is a block diagram showing a configuration of a communication system in a sixth embodiment.
[Fig. 16] Fig. 16 is a diagram showing a configuration example of user equipment in the sixth embodiment.
[Fig. 17] Fig. 17 is a diagram showing a PtP WDM-PON system.
[Fig. 18] Fig. 18 is a diagram showing an example of an optical signal transmitted from an ONU or an OLT.
[Fig. 19] Fig. 19 is a diagram showing a configuration of an optical communication system to which an APN is applied.
[Fig. 20] Fig. 20 is a diagram showing an example of exceeding an upper limit of a receivable region.
[Fig. 21] Fig. 21 is a diagram showing an example of exceeding an upper limit of a receivable region.

### Description of Embodiments

Embodiments of the present invention will be described in detail with reference to the diagrams. In the following description, description of the already described reference numerals may be omitted.

### (First Embodiment)

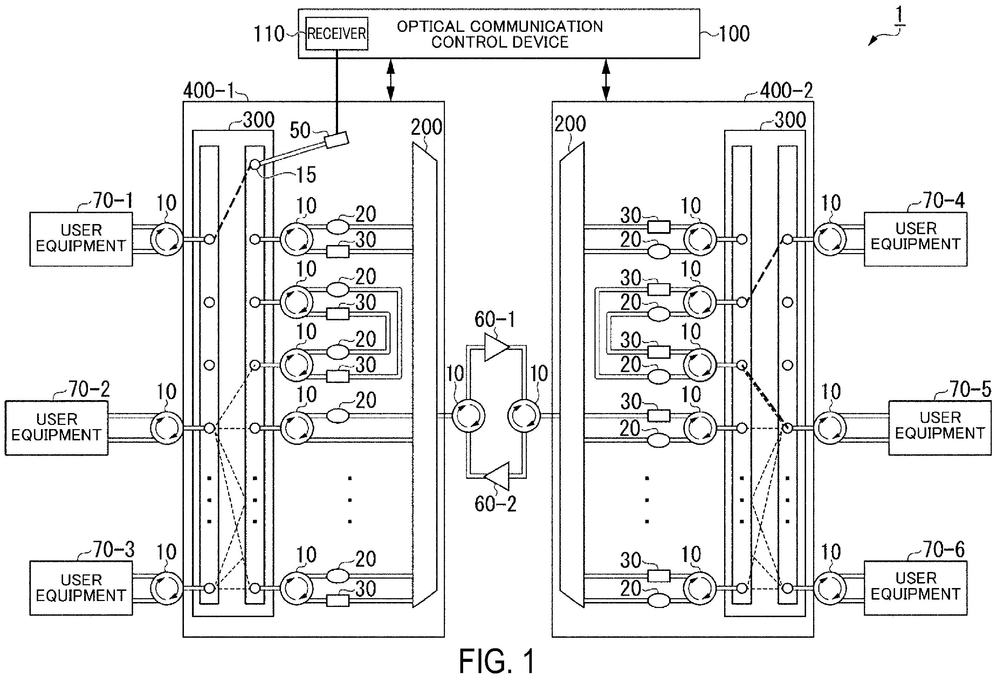

Fig. 1 is a block diagram showing a configuration of a communication system 1 in a first embodiment. The communication system 1 includes an optical communication control device 100 and Photonic GWs (PhGWs) 400-1 and 400-2. In Fig. 1, the PhGW 400-1 is connected to user equipment 70-1, 70-2, and 70-3 via a circulator 10. The PhGW 400-2 is connected to user equipment 70-4, 70-5, and 70-6 via a circulator 10. In the following description, in a case in which the PhGWs 400-1 and 400-2 are not particularly distinguished, they are represented as a PhGW 400. Further, in a case in which the user equipment 70-1, 70-2, 70-3, 70-4, 70-5, and 70-6 is not particularly distinguished, they are represented as user equipment 70. The user equipment 70 is an example of a transmission device and a receiver device. In addition, the user equipment 70 is connected to the PhGWs 400-1 and 400-2 by an optical fiber. The PhGWs 400-1 and 400-2 are examples of optical nodes.

Although both the PhGWs 400-1 and 400-2 are connected to three pieces of user equipment as an example, they may be connected to one, two, or four or more user equipments or no user equipment may be connected thereto since the PhGWs 400-1 and 400-2 are connected by a user as necessary.

The optical communication control device 100 sets a wavelength used by the user equipment 70 and controls the PhGWs 400-1 and 400-2 (controls route setting of an optical switch 300, and the like). The optical communication control device 100 derives an attenuation amount such that a device that has received an optical signal does not malfunction. A configuration relating to the derivation of an attenuation amount will be described later.

The PhGW 400 includes the optical switch 300, the circulator 10, a coupler 20, a variable attenuator (ATT) 30, and a wavelength multiplexing/demultiplexing unit 200. The PhGW 400-1 is provided with a PMATT 50 including a power meter and a variable ATT after an initial port 15. Although a device similar to the PMATT 50 and the initial port 15 are also provided in the PhGW 400-2, illustration thereof is omitted. Further, the wavelength multiplexing/demultiplexing unit 200 demultiplexes signals of a plurality of wavelengths or multiplexes signals of a plurality of wavelengths. The wavelength multiplexing/demultiplexing unit 200 is an arrayed waveguide grating (AWG), for example.

In addition, the optical communication control device 100 and the PhGW 400 mainly have five functions. The first function is a wavelength control/monitoring function of specifying and controlling which wavelength will be used by a user and monitoring the wavelength of the signal. The second function is a passing/stopping function of passing a signal in accordance with opening of a path and stopping an unnecessary signal. The third function is a function of collecting optical signals of a wavelength assigned to each user and transferring them to a relay network, and a collecting/distributing function of distributing optical signals transferred from the relay network for respective wavelengths. The fourth function is a returning function of enabling returning at the PhGW 400 to which an optical signal is input without passing through the optical switch 300 with respect to traffic requiring a shortest route. The fifth function is an extraction/insertion function of enabling processing at the position of the PhGW 400 in order to perform reproduction, relay and electrical processing.

A reception unit 110 of the optical communication control device 100 and the PMATT 50 are connected such that optical signal communication for exchanging a management control signal called an auxiliary management and control channel (AMCC) can be performed. In the first embodiment, the reception unit 110 is controlled such that it does not malfunction due to excessive optical power.

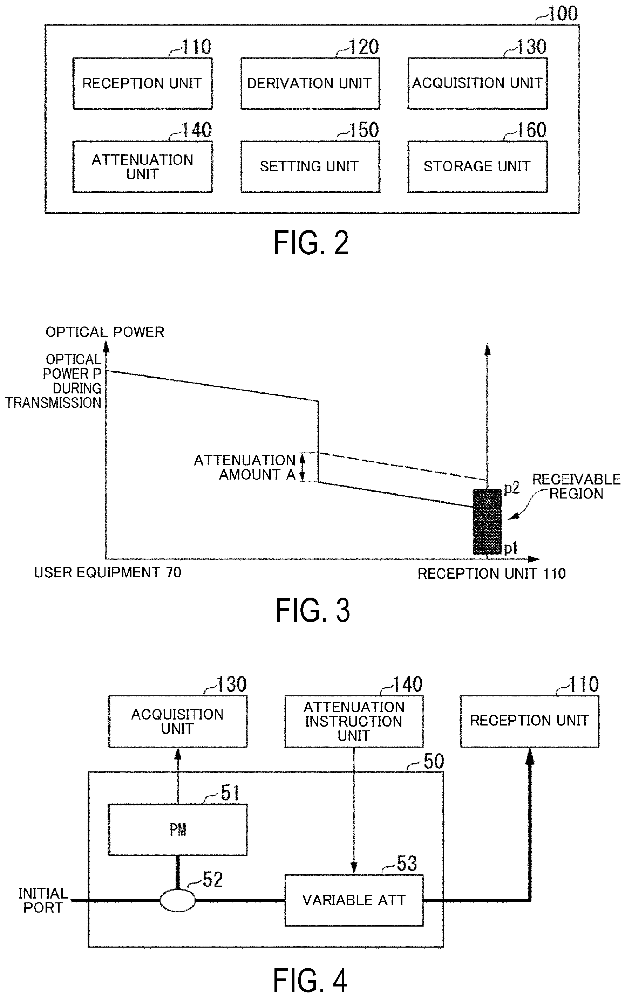

Fig. 2 is a diagram showing a configuration example of the optical communication control device 100. In the configuration example shown in Fig. 2, components related to derivation of an attenuation amount are illustrated, and components related to assignment of a wavelength to be used by s user equipment and control of the Ph GWs 400-1 and 400-2 are omitted. The optical communication control device 100 includes the aforementioned reception unit 110, a derivation unit 120, an acquisition unit 130, the attenuation unit 140, a setting unit 150, and a storage unit 160.

The acquisition unit 130 acquires an optical power of an optical signal transmitted from user equipment 70. In a case in which the optical power acquired by the acquisition unit 130 exceeds an optical power that can be received by user equipment 70 on the reception side, the derivation unit 120 derives an attenuation amount for setting the optical power of the optical signal transmitted from the user equipment 70 on the transmission side to the optical power that can be received by the user equipment 70 on the reception side. The attenuation unit 140 causes an attenuator for attenuating the optical power of the transmitted optical signal to attenuate the optical power with the attenuation amount derived by the derivation unit 120. In the setting unit 150, range information on the optical power that can be received by the user equipment 70 on the reception side is set by, for example, a manager of the optical communication control device 100. The set range information is stored in the storage unit 160. The storage unit 160 is, for example, a flash memory.

For example, when a lower limit of the optical power that can be received on the reception side is p1 and an upper limit is p2 with respect to the range information, the [p1, p2] are set as range information by the manager. Range information is set by the manager in advance for each user equipment 70. Range information in the first embodiment is range information of the reception unit 110.

An example of deriving an attenuation amount by the derivation unit 120 will be described with reference to Fig. 3. In Fig. 3, the horizontal axis represents a transmission distance and the vertical axis represents optical power. When the range information is [p1, p2], the optical power acquired by the acquisition unit 130 is P, and the attenuation amount to be obtained is A(dB),
p1≤P-A≤p2 is established,
that is,
A (for example, A=P-p2) satisfying P-p2≤A≤P-p1 is derived as an attenuation amount.
The derivation method is not limited thereto. As a derivation method, there may be a derivation method which does not cause a malfunction of a device and does not cause a trouble in communication when attenuation has occurred. An attenuation amount may be derived such that p1≤P-A-X≤p2 is established in consideration of an attenuation amount X (X may be a constant or a variable) due to a factor (transmission distance or the like) that attenuates the power of an optical signal in a route through which the optical signal passes.

In the case of A>0, the optical power is excessive, and thus the attenuation unit 140 causes the attenuator for attenuating the optical power of the transmitted optical signal to attenuate the optical power with the attenuation amount A. In the case of A=P-p2, the optical power of the optical signal becomes p2 by the attenuator.

Fig. 4 is a diagram showing a configuration example of the PMATT 50. The PMATT 50 includes a power meter (PM) 51, a coupler 52, and a variable ATT 53. An optical signal input from the initial port 15 is distributed to the PM 51 and the variable ATT 53 by the coupler 52. In a state before the optical signal is input from the initial port 15, the variable ATT 53 is adjusted to an attenuation amount (for example, a maximum attenuation amount) which does not cause a malfunction even if the receiver 110 receives the optical signal.

When an optical signal is input from the initial port 15, the optical power is detected by the PM 51. The detected optical power is output to an acquisition unit 130. Accordingly, an attenuation amount is derived, and an attenuation unit 140 adjusts the attenuation amount of the variable ATT 53 to cause the variable ATT 53 to attenuate the optical power with the derived attenuation amount. Accordingly, it is possible to prevent the reception unit 110 from malfunctioning due to excessive optical power.

In this manner, the user equipment 70 and the optical communication control device 100 communicate with each other, and the user equipment 70 notifies the optical communication control device 100 of a user ID for identifying the user and information on a requested connection destination through an AMCC signal. When a wavelength used in communication is assigned to the user equipment 70 and the PhGW 400 is controlled by the optical communication control device 100, a path between the user equipment 70 and a communication destination is opened. A flow until the path is opened will be described.

In Fig. 1, an optical signal input from the user equipment 70 is guided to an appropriate route by the optical switch 300. The optical signal output from the optical switch 300 is input to the wavelength multiplexing/demultiplexing unit 200 via the circulator 10 and the coupler 20 in the case of communication with the user equipment 70 connected to a PhGW 400 of another ground (hereinafter referred to as "another ground communication"). In the case of communication with user equipment 70 connected to the same PhGW 400 (hereinafter referred to as "the same communication"), the optical signal is input to the variable ATT 30 to be returned.

In the case of the same communication, the optical signal output from the variable ATT 30 is input to the optical switch 300 again and output to a port to which user equipment 70 for communicating is connected, and thus communication becomes possible. On the other hand, in the case of another ground communication, the optical signal output from the wavelength multiplexing/demultiplexing unit 200 is amplified by an amplifier 60-1 or 60-2 via a circulator 10 in the following stage, and is input to the PhGW 400 of another ground via the circulator 10 in the following stage. The optical signal input to the PhGW 400 is input to a wavelength multiplexing/demultiplexing unit 200, demultiplexed, and input to the optical switch 300 via the variable ATT 30. The optical signal input to the optical switch 300 is output to a port to which user equipment 70 for communication is connected by the optical switch 300, thereby opening a path.

As shown in the flow until the path is opened as described above, the optical signal passes through the variable ATT 30 only once in both the same communication and another ground communication.

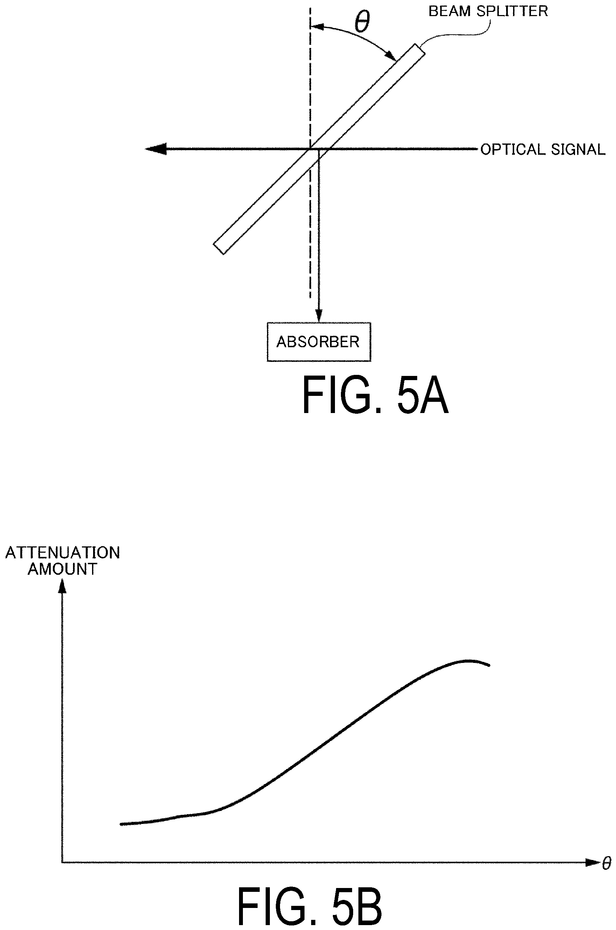

Next, three types of configuration examples of a variable ATT will be described. Fig. 5A is a diagram showing a configuration example using a beam splitter and an absorber. By making an angle 9 formed by a direction perpendicular to a transmission direction of an optical signal and the beam splitter variable, an attenuation amount can be changed as shown in Fig. 5B. For example, an attenuation amount corresponding to an angle at which the stage on which the beam splitter is placed is rotated is obtained in advance, and a desired attenuation amount is realized by moving the stage to be an angle corresponding to the obtained attenuation amount.

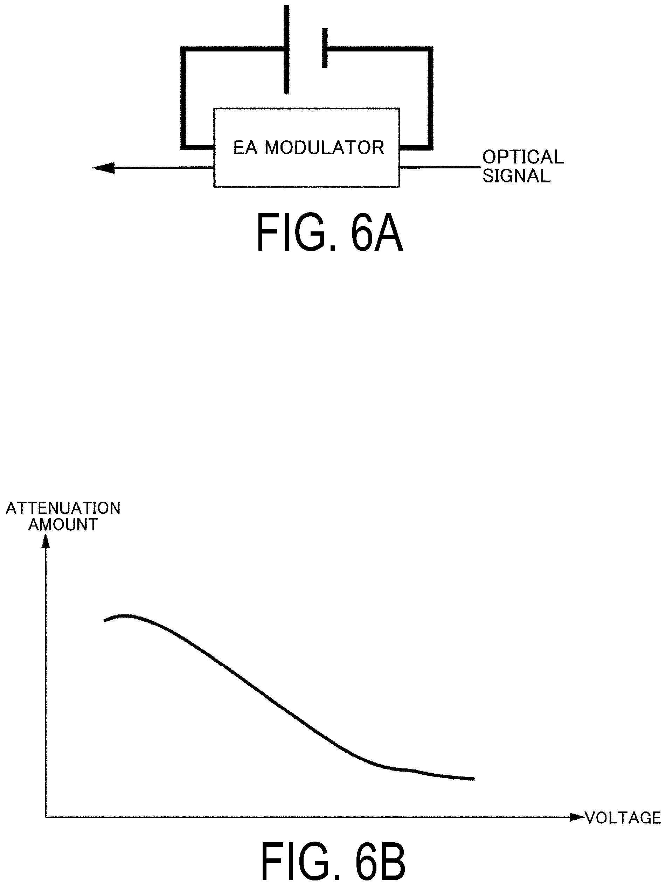

Fig. 6A is a diagram showing a configuration example using an electro-absorption (EA) modulator. By making a voltage applied to the EA modulator variable, an attenuation amount can be changed as shown in Fig. 6B. For example, an attenuation amount corresponding to the voltage is obtained in advance, and a desired attenuation amount is realized by applying a voltage corresponding to the obtained attenuation amount.

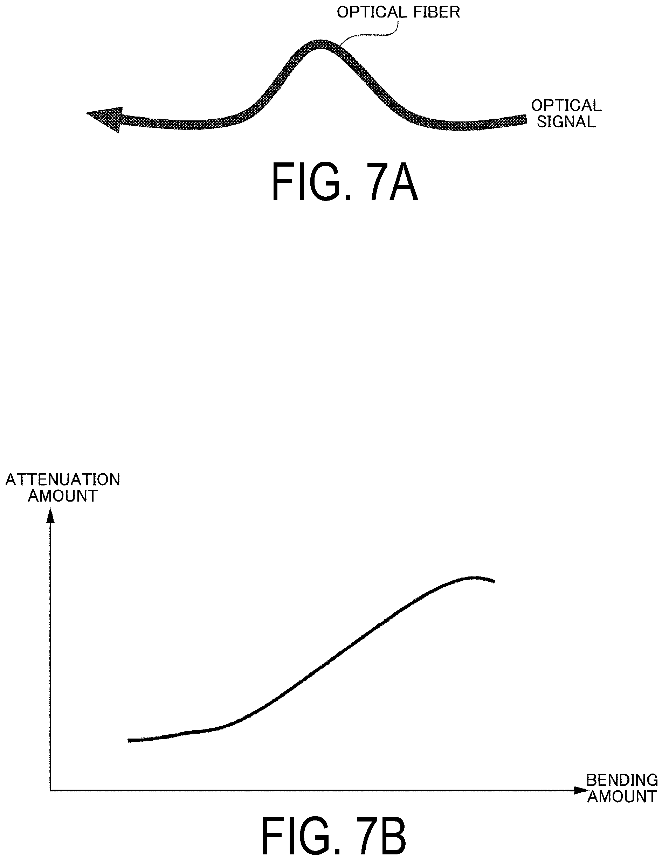

Fig. 7A is a diagram showing a configuration example using bending of an optical fiber. By making a bending amount of the optical fiber variable, an attenuation amount can be changed as shown in Fig. 7B. An attenuation amount corresponding to a bending amount is obtained in advance, and a desired attenuation amount is realized by applying bending corresponding to the obtained attenuation amount to the optical fiber.

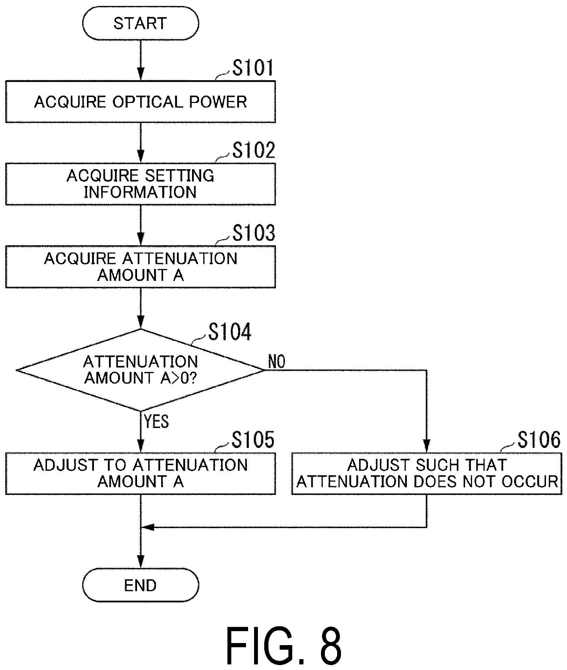

Fig. 8 is a flowchart showing a flow of processing of the optical communication control device 100. The acquisition unit 130 acquires an optical power (step S101). The derivation unit 120 acquires setting information stored in the storage unit 160 (step S102) and derives an attenuation amount A using the above-described derivation method or the like (step S104). The attenuation unit 140 determines whether or not attenuation amount A>0 (step S104). If the attenuation amount A>0 (YES in step S104), the attenuation unit 140 adjusts the attenuation amount of the variable ATT 53 to cause the variable ATT 53 to attenuate the optical power with the derived attenuation amount (step S105). On the other hand, if the attenuation amount A≤0 (NO in step S104), the attenuation unit 140 adjusts the variable ATT 53 such that the variable ATT 53 does not attenuate (step S106).

The flow of processing shown in Fig. 8 is not limited to the first embodiment and is a basic flow applicable to embodiments which will be described below.

According to the first embodiment described above, since an optical power is attenuated within a receivable range, it is possible to prevent a device from malfunctioning due to excessive optical power. In the first embodiment, the optical communication control device 100 may also adjust the attenuation amount of the variable ATT 30. That is, setting information of user equipment 70 on the reception side is set in advance, and an attenuation amount is derived from the setting information on the reception side and the optical power of user equipment 70 on the transmission side. Then, the optical communication control device 100 adjusts the attenuation amount of the variable ATT 30 on the communication route. Accordingly, malfunction of the user equipment 70 can be prevented.

### (Second Embodiment)

Although a malfunction of the reception unit 110 of the optical communication control device 100 is prevented in the above-described first embodiment, prevention of a malfunction of the user equipment 70 is described in a second embodiment.

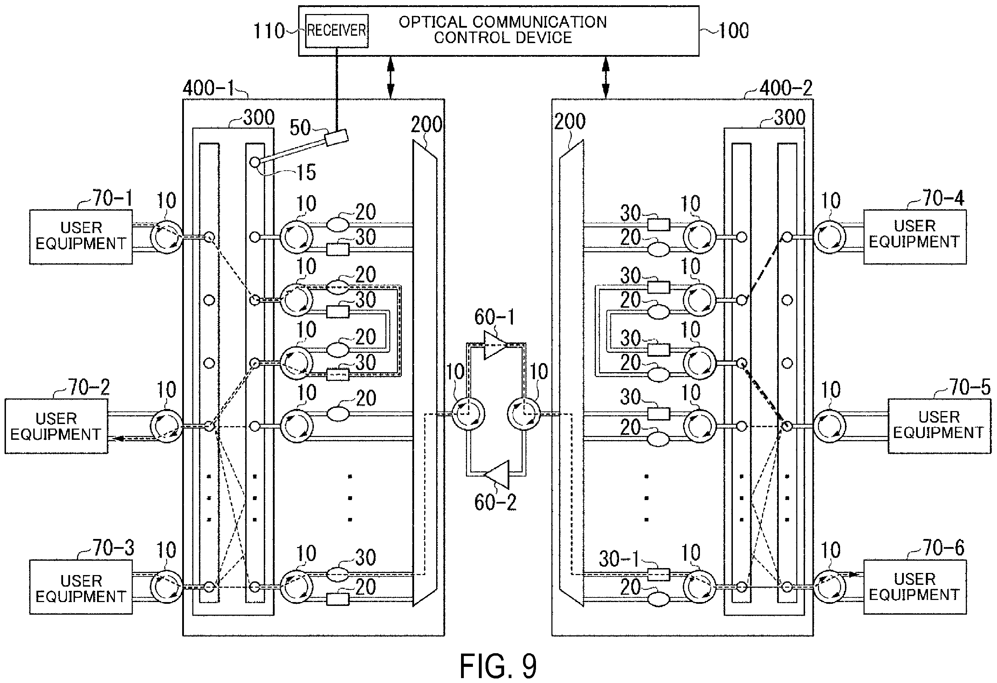

Fig. 9 is a block diagram showing a configuration of a communication system 1 in the second embodiment. The communication system 1 in the second embodiment differs from the communication system 1 in the first embodiment in that the user equipment 70 detects the optical power of an optical signal it transmits thereby and transmits the detected optical power to the optical communication control device 100.

Further, in the second embodiment, the derivation unit 120 derives an attenuation amount in accordance with a transmission distance between a first optical node connected to user equipment 70 on the transmission side through an optical fiber and the user equipment 70 on the transmission side, and a transmission distance between a second optical node connected to user equipment 70 on the reception side through an optical fiber and the user equipment 70 on the reception side.

For example, in a case in which the user equipment 70-1 is on the transmission side and the user equipment 70-6 is on the reception side, the first node corresponds to the PhGW 400-1 and the second node corresponds to the PhGW 400-2. On the other hand, in a case in which the user equipment 70-1 is on the transmission side and the user equipment 70-3 is on the reception side, both the first node and the second node correspond to the PhGW 400-1. Further, the variable ATT 30 in the PhGW 400 is adjusted to an attenuation amount (for example, a maximum attenuation amount) which does not cause a malfunction even if the user equipment 70 receives an optical signal in a state before communication.

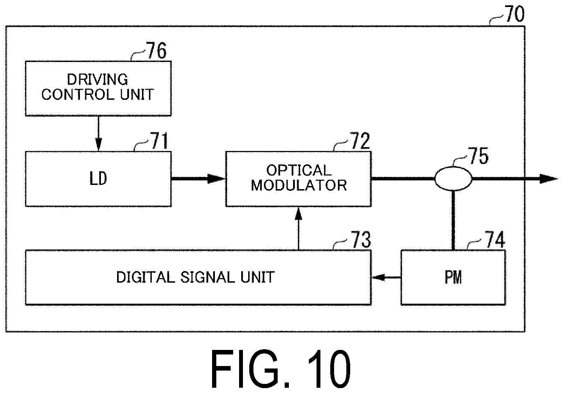

Fig. 10 is a diagram showing a configuration example of the user equipment 70 in the second embodiment. In the configuration example shown in Fig. 10, components related to detection of optical power are illustrated, and other components are omitted. The user equipment 70 includes a laser diode (LD) 71, an optical modulator 72, a digital signal unit 73, a PM 74, a coupler 75, and a driving control unit 76.

The driving control unit 76 performs driving control of the LD 71. The LD 71 is a light source of an optical signal. The optical modulator 72 converts an electrical signal output from the digital signal unit 73 into an optical signal using light emitted from the LD 71. The PM 74 detects the optical power of an optical signal output from the coupler 75. The digital signal unit 73 is notified of the detected optical power. Accordingly, the user equipment 70 can notify the optical communication control device 100 of the optical signal indicating the optical power.

In the second embodiment, when the user equipment 70 performs initial connection, connection with the optical communication control device 100 is started, and an AMCC signal is received by the reception unit 110 of the optical communication control device 100. Then, the reception unit 110 and the user equipment 70 transmit/receive a time stamp through the AMCC signal, and the optical communication control device 100 calculates a transmission distance from the user equipment 70 to the PhGW 70 by measuring a propagation time in which a frame reciprocates. When the opposite user equipment 70 performs initial connection, the optical communication control device 100 similarly calculates a transmission distance from the user equipment 70 to the PhGW 400. The transmission distance calculated in this manner is set as setting information by the setting unit 150. In addition, each user equipment notifies the optical communication control device 100 of the detected optical power, a user ID for identifying the user, and information on a requested connection destination through an AMCC signal.

The optical communication control device 100 sets a wavelength to be used by the user equipment 70 and transmits a route to the optical switch 300. Further, in the second embodiment, the setting information includes not only a range that can be received by the user equipment 70 on the reception side but also an attenuation amount due to optical components constituting the PhGW 400. Here, optical components constituting the PhGW 400-1 indicate all optical components through which optical signals pass, for example, the circulator 10, the coupler 20, the variable ATT 30, the optical switch 300, and the like. Further, an optical signal is amplified by an amplifier 60-1 or an amplifier 60-2 or attenuated according to a transmission distance between PhGWs 400 (between the PhGW 400-1 and PhGW 400-2). The total attenuation amount or amplification amount between the PhGWs 400 is stored in advance in the storage unit 160 as setting information.

The optical communication control device 100 derives an attenuation amount from the optical power and the setting information notified from the user equipment 70 on the transmission side at the time of initial connection. An example of derivation of an attenuation amount by the derivation unit 120 will be described. It is assumed that a known attenuation function f=f(d) of monotonous increase determined by a transmission distance d is set in advance as setting information. Further, a total attenuation amount from input of an optical signal to the PhGW 400 connected to the user equipment 70 on the transmission side to output of the PhGW 400 connected to the user equipment 70 on the reception side is set as AG. In this case, the optical communication control device 100 adjust the attenuation amount of the variable ATT 30 such that p1≤P-f(d)-AG-A≤p2 is established, that is,
A (for example, A=P-p2-f(d)-AG) satisfies P-p2-f(d)-AG≤A≤P-p1-f(d)-AG.
The variable ATT 30 whose attenuation amount is adjusted is a variable ATT 30 in a route through which an optical signal passes during communication in the PhGW 400 connected to the user equipment 70 on the reception side. For example, in a case in which the user equipment 70-3 is on the transmission side and the user equipment 70-6 is on the reception side in Fig. 9, the attenuation amount of a variable ATT 30-1 is adjusted.

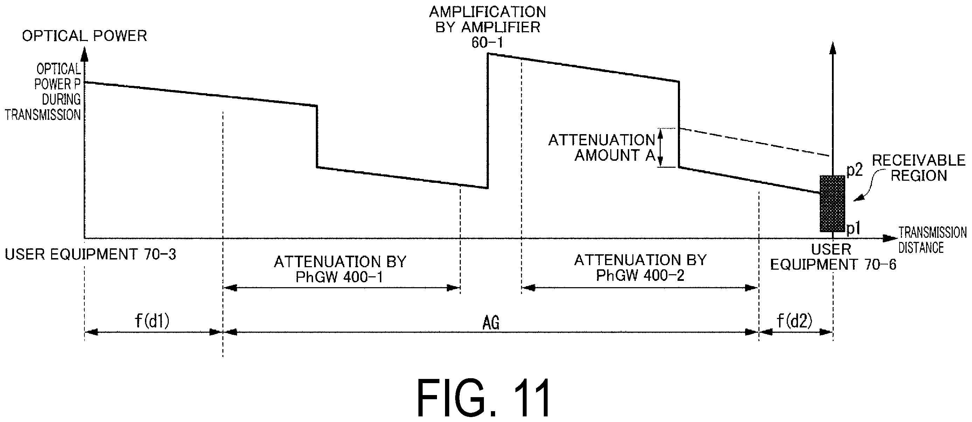

Next, an example of attenuation due to a transmission distance, an optical component, or the like will be described with reference to Fig. 11. Fig. 11 is a diagram showing an example of attenuation due to a transmission distance or the like. In Fig. 11, the horizontal axis represents a transmission distance and the vertical axis represents optical power. As an example, Fig. 11 shows an example of attenuation when the user equipment 70-3 is set to the transmission side and the user equipment 70-6 is set to the reception side. Further, a transmission distance between the user equipment 70-3 and the PhGW 400-1 is defined as d1 and a transmission distance between the user equipment 70-6 and the PhGW 400-2 is defined as d2. AG in the figure indicates an attenuation amount in a case in which attenuation does not occur with an attenuation amount A.

The optical power of an optical signal transmitted from the user equipment 70-3 is gradually attenuated and further attenuated by optical components constituting the PhGW 400-1.

The optical signal output from the PhGW 400-1 is amplified by the amplifier 60-1, and thus the optical power thereof is increased. Thereafter, the optical signal is input to the PhGW 400-2, attenuated by the PhGW 400-2, and further attenuated by the derived attenuation amount A to become an optical power that can be received by the user equipment 70-6.

By deriving the attenuation amount in accordance with the transmission distance in this manner, it is possible to derive an attenuation amount suitable for each user equipment 70 and to prevent a malfunction of the equipment due to excessive optical power. The variable ATT 30 may be different from a variable branching splitter for extracting an AMCC signal, and may serve as a variable ATT by changing a branching ratio through the variable branching splitter.

Further, an attenuation amount may be derived depending on the wavelength λ of an optical signal. In this case, P, p1, and p2 are actual measurement values measured at the wavelength λ. In addition, the AG is defined as a function AG(X) of the wavelength λ, and f(d) is defined as a function f(d, λ) of the wavelength λ as well as the transmission distance d.
In this case,
the attenuation amount is derived such that
p1≤P-f(d, λ)-AG(λ)-A≤p2 is established.
By using attenuation information in consideration of the wavelength λ in this manner, it is possible to set an attenuation amount in accordance with a wavelength used in each connection in more detail.

### (Third Embodiment)

In the above-described second embodiment, an optical power notification source is the user equipment 70 on the transmission side. Instead of this configuration, an attenuation amount may be derived using an optical power detected through an optical signal input from the initial port 15 as in the first embodiment.

As described in the first embodiment, the optical communication control device 100 acquires an optical power from the PM 51 (refer to Fig. 4). Then, as described in the second embodiment, the optical communication control device 100 derives an attenuation amount according to a transmission distance and a wavelength, and adjusts the attenuation amount of a variable ATT 30 in a route through which the optical signal passes during communication in the PhGW 400 connected to the user equipment 70 on the reception side.

Accordingly, the attenuation amount according to the transmission distance and the wavelength can be derived without providing a power meter in the user equipment 70, an attenuation amount suitable for each user equipment 70 can be derived, and a malfunction of a device due to excessive optical power can be prevented.

### (Fourth Embodiment)

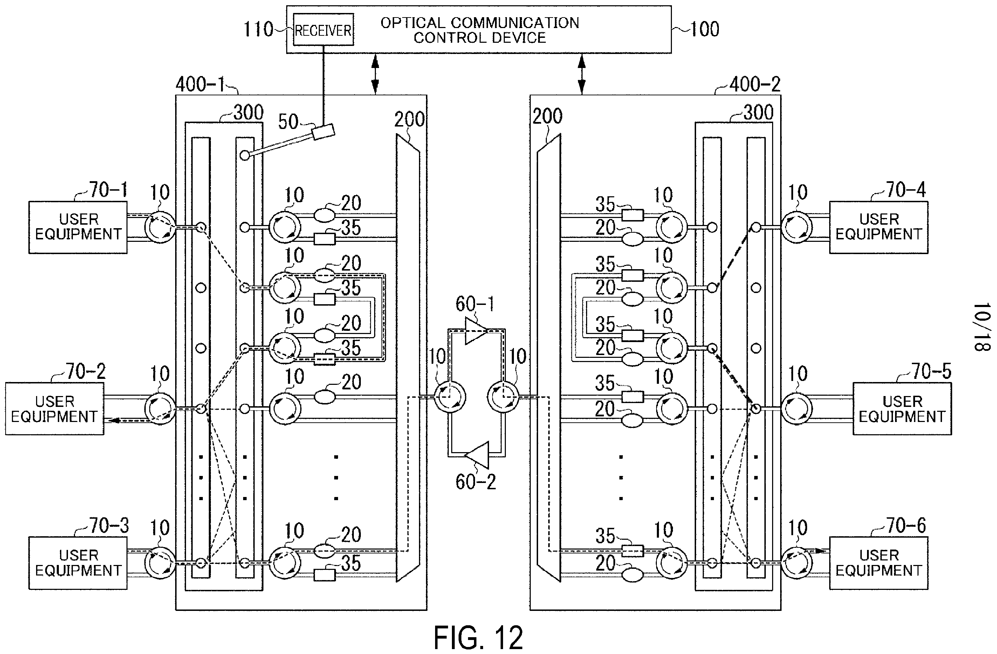

Fig. 12 is a block diagram showing a configuration of a communication system 1 in a fourth embodiment. In the fourth embodiment, a PMATT 35 having the same configuration as that of the PMATT described in Fig. 4 is provided between the wavelength multiplexing/demultiplexing unit 200 and the circulator 10 to which a downstream optical signal from the wavelength multiplexing/demultiplexing unit 200 is input in the PhGW 400.

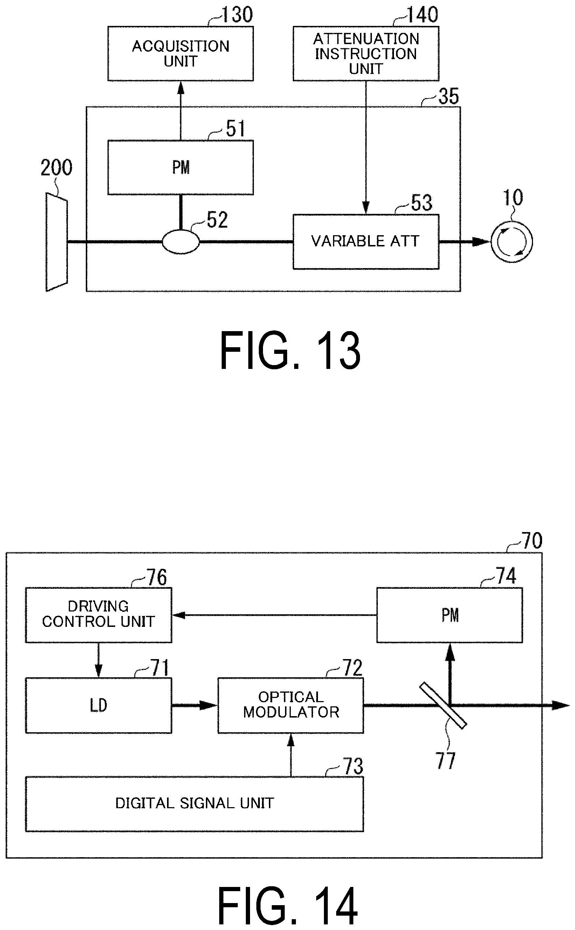

Fig. 13 is a diagram showing a configuration example of the PMATT 35. The PMATT 35 includes a PM51, a coupler 52, and a variable ATT 53. An optical signal input from the wavelength multiplexing/demultiplexing unit 200 is distributed to the PM 51 and the variable ATT 53 by the coupler 52. In a state before the optical signal is input from the wavelength multiplexing/demultiplexing unit 200, the variable ATT 53 is adjusted to an attenuation amount (for example, a maximum attenuation amount) which does not cause a malfunction even if the user equipment 70 receives the optical signal.

When a path between the user equipment 70 on the transmission side and the user equipment 70 on the reception side is opened, the optical power is detected by the PM 51. The detected optical power is output to the acquisition unit 130. An attenuation amount is derived by the acquisition unit 130 acquiring the optical power, and the attenuation unit 140 adjusts the attenuation amount of the variable ATT 53 to cause the variable ATT 53 to attenuate the optical power with the derived attenuation amount. Accordingly, it is possible to prevent the user equipment 70 on the reception side from malfunctioning due to excessive optical power.

### (Fifth Embodiment)

The fifth embodiment is an embodiment in which user equipment is configured to keep the optical power of an optical signal transmitted by the user equipment constant in the second embodiment. Therefore, the optical communication control device 100 acquires an optical power from user equipment in the second embodiment, whereas the optical power of each user equipment is set by a manager in advance as setting information in the fifth embodiment. The derivation unit 120 derives an attenuation amount from the optical power stored in the storage unit 160 as setting information using the derivation method described in the second embodiment. The optical communication control device 100 adjusts an attenuation amount of a variable ATT 30 in a route through which an optical signal passes during communication in the PhGW 400 connected to the user equipment 70 on the reception side.

Fig. 14 is a diagram showing a configuration example of the user equipment 70 in the fifth embodiment. In the configuration example shown in Fig. 14, components related to control of optical power are illustrated, and other components are omitted. The user equipment 70 includes an LD 71, an optical modulator 72, a digital signal unit 73, a PM 74, a half mirror 77 and a driving control unit 76.

The driving control unit 76 performs driving control of the LD 71. The optical modulator 72 converts an electrical signal output from the digital signal unit 73 into an optical signal. The PM 74 detects the optical power of an optical signal from the half mirror 77. The driving control unit 76 is notified of the detected optical power. The driving control unit 76 controls the LD 71 to make the optical power constant by feedback control. Accordingly, the user equipment 70 can transmit the optical signal with constant optical power.

Accordingly, an attenuation amount according to a transmission distance and a wavelength can be derived without providing a power meter in the PhGW 400, an attenuation amount suitable for each user equipment 70 can be derived, and a malfunction of a device due to excessive optical power can be prevented.

### (Sixth Embodiment)

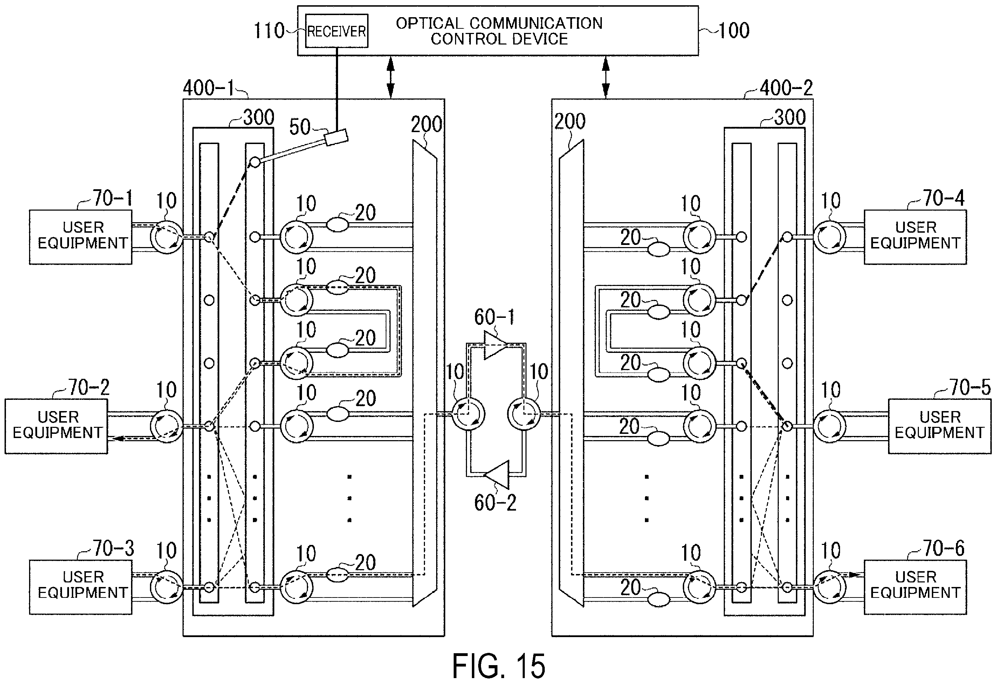

Fig. 15 is a block diagram showing a configuration of a communication system 1 in a sixth embodiment. The communication system 1 in the sixth embodiment is characterized in that no variable ATT is provided between the wavelength multiplexing/demultiplexing unit 200 and the circulator 10 to which a downstream optical signal from the wavelength multiplexing/demultiplexing unit 200. Instead, a variable ATT is provided in the user equipment 70 on the reception side.

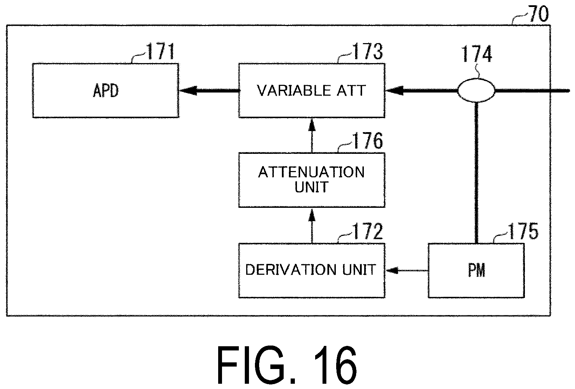

Fig. 16 is a diagram showing a configuration example of the user equipment 70 in the sixth embodiment. In the configuration example shown in Fig. 16, components related to control of the variable ATT are illustrated, and other components are omitted. The user equipment 70 includes an Avalanche photodiode (APD) 171, a derivation unit 172, an attenuation unit 176, a variable ATT 173, a PM 175 and a coupler 174.

An optical signal input from the PhGW 400 is distributed to the PM 175 and the variable ATT 173 by the coupler 174. In a state before the optical signal is input from the PhGW 400, the variable ATT 173 is adjusted to an attenuation amount (for example, a maximum attenuation amount) which does not cause a malfunction even if the APD 171 receives the optical signal.

When a path between the user equipment 70 on the transmission side and the user equipment 70 on the reception side is opened, the optical power is detected by the PM 175. The detected optical power is output to the derivation unit 172. The derivation unit 172 assumes that the range of an optical power that can be received by the APD 171 is known. The derivation unit 172 derives an attenuation amount from the optical power and the range of optical power that can be received by the APD 171. The attenuation unit 176 adjusts the attenuation amount of the variable ATT 173 to cause the variable ATT 173 to attenuate the optical power with the derived attenuation amount. Accordingly, the APD 71 can be prevented from malfunctioning due to excessive optical power.

### (Seventh Embodiment)

In the seventh embodiment, a variable ATT 30 is provided between the wavelength multiplexing/demultiplexing unit 200 and the circulator 10 to which a downstream optical signal is input from the wavelength multiplexing/demultiplexing unit 200 in the PhGW 400 in the sixth embodiment, as in other embodiments, and both the user equipment 70 on the reception side and the variable ATT 30 of the PhGW 400 are caused to perform attenuation.

For example, in a case in which the attenuation amount derived by the derivation unit 120 of the optical communication control device 100 is equal to or greater than 1 dB, the variable ATT 30 of the PhGW 400 is caused to perform attenuation by an amount exceeding 1 dB. Specifically, in a case in which the derived attenuation amount is 12 dB, the variable ATT 30 is caused to attenuate 11 dB. Then, the remaining necessary attenuation amount (for example, 1 dB) is controlled by the variable ATT 173 of the user equipment 70 such that the APD 171 does not malfunction. Accordingly, a malfunction of a device due to excessive optical power can be prevented.

In each of the above-described embodiments, the circulator 10 is an example of separating an upstream optical signal from a downstream optical signal, and any device (for example, an upper/lower separation filter or the like) may be used as long as it separates an upstream optical signal from a downstream optical signal.

Among the embodiments described above, in all the embodiments of calculating a transmission distance, it is possible to calculate an attenuation amount without calculating a transmission distance by setting the transmission distance from the user equipment 70 to PhGW 400, the transmission distance between the PhGW 400-1 and the PhGW 400-2, and attenuation amounts of light due to these transmission distances as setting information in advance by a manager.

The above-described optical communication control device 100 may be configured using a processor such as a central processing unit (CPU) and a memory. In this case, the optical communication control device 100 functions as the derivation unit 120, the acquisition unit 130, the attenuation unit 140, and the setting unit 150 by the processor executing a program. All or some functions of the optical communication control device 100 may be realized using hardware such as an application specific integrated circuit (ASIC), a programmable logic device (PLD), and a field programmable gate array (FPGA). The aforementioned program may be recorded in a computer-readable recording medium. The computer-readable recording medium is, for example, a portable medium such as a flexible disk, a magneto-optical disk, a ROM, a CD-ROM, or a semiconductor storage device (a solid state drive (SSD), for example), or a storage device such as a hard disk, a semiconductor storage device, or the like incorporated in a computer system. The above program may be transmitted via a telecommunication line.

Although the embodiment of the present invention has been described in detail with reference to the drawings, a specific configuration is not limited to this embodiment, and design within the scope of the gist of the present invention, and the like are included.

### Industrial Applicability

The present invention is applicable to a communication system that performs communication using an optical fiber.

### Reference Signs List

10 Circulator
15 Initial port
20, 52, 75, 174 Coupler
60-1, 60-2 Amplifier
70 User equipment
72 Optical modulator
73 Digital signal unit
76 Driving control unit
77 Half mirror
100 Optical communication control device
110 Reception unit
120 Derivation unit
130 Acquisition unit
140, 176 Attenuation unit
150 Setting unit
172 Derivation unit
200 Wavelength multiplexing/demultiplexing unit
300 Optical switch

## Claims

1. An optical communication control device comprising:
an acquisition unit configured to acquire an optical power of an optical signal transmitted from a transmission device;
a derivation unit configured to derive an attenuation amount for setting the optical power of the optical signal transmitted from the transmission device to an optical power receivable by a receiver device in a case in which the optical power acquired by the acquisition unit exceeds the optical power receivable by the receiver device; and
an attenuation unit configured to cause an attenuator that attenuates the optical power of the optical signal transmitted from the transmission device to attenuate the optical power with the attenuation amount derived by the derivation unit.

2. The optical communication control device according to claim 1, wherein
the derivation unit derives the attenuation amount in accordance with a transmission distance between a first optical node connected to the transmission device by an optical fiber and the transmission device, and a transmission distance between a second optical node connected to the receiver device by an optical fiber and the receiver device.

3. The optical communication control device according to claim 2, wherein
the derivation unit derives the attenuation amount in accordance with an attenuation amount in which an optical signal is attenuated or an amplification amount in which an optical signal is amplified between the first optical node and the second optical node.

4. The optical communication control device according to any one of claims 1 to 3, wherein
the acquisition unit acquires an optical power detected by the transmission device.

5. A receiver device comprising:
a reception unit configured to receive an optical signal;
a detection unit provided before the reception unit and configured to detect an optical power of the optical signal received by the reception unit;
a derivation unit configured to derive an attenuation amount for setting the optical power of the optical signal to an optical power receivable by the reception unit in a case in which the optical power detected by the detection unit exceeds the optical power receivable by the reception unit; and
an attenuation unit configured to cause an attenuator that attenuates the optical power of the optical signal received by the reception unit to attenuate the optical power with the attenuation amount derived by the derivation unit.

6. A communication system including an optical communication control device and an attenuator that attenuates an optical power of an optical signal,
wherein the optical communication control device comprises:
an acquisition unit configured to acquire an optical power of an optical signal transmitted from a transmission device;
a derivation unit configured to derive an attenuation amount for setting the optical power of the optical signal transmitted from the transmission device to an optical power receivable by a receiver device in a case in which the optical power acquired by the acquisition unit exceeds the optical power receivable by the receiver device; and
an attenuation unit configured to cause the attenuator that attenuates the optical power of the optical signal transmitted from the transmission device to attenuate the optical power with the attenuation amount derived by the derivation unit.

7. A control method of an optical communication control device, the control method comprising:
an acquisition step of acquiring an optical power of an optical signal transmitted from a transmission device;
a derivation step of deriving an attenuation amount for setting the optical power of the optical signal transmitted from the transmission device to an optical power receivable by a receiver device in a case in which the optical power acquired in the acquisition step exceeds the optical power receivable by the receiver device; and
an attenuation step of causing an attenuator that attenuates the optical power of the optical signal transmitted from the transmission device to attenuate the optical power with the attenuation amount derived in the derivation step.

8. A control method of a communication system including an optical communication control device and an attenuator that attenuates an optical power of an optical signal,
wherein the optical communication control device comprises:
an acquisition step of acquiring an optical power of an optical signal transmitted from a transmission device;
a derivation step of deriving an attenuation amount for setting the optical power of the optical signal transmitted from the transmission device to an optical power receivable by a receiver device in a case in which the optical power acquired in the acquisition step exceeds the optical power receivable by the receiver device; and
an attenuation step of causing the attenuator that attenuates the optical power of the optical signal transmitted from the transmission device to attenuate the optical power with the attenuation amount derived in the derivation step.
